# EUROPEAN PATENT SPECIFICATION

(11) **EP 3 102 311 B1**
(45) Date of publication and mention of the grant of the patent: **11.07.2018**
(21) Application number: 15700303.9
(22) Date of filing: 14.01.2015
(51) Int. Cl.: B01D 53/14

(54) **CO2 CHEMOSORPTION BY FUNCTIONALIZED AMINO ACID DERIVATIVES**
CO2-CHEMOSORPTION MITTELS FUNKTIONALISIERTER AMINOSÄUREDERIVATEN
CHÉMISORPTION DE CO2 PAR DES DÉRIVÉS D'ACIDES AMINÉS FONCTIONNALISÉS

(30) Priority: 15.01.2014 EP 14151289
(43) Date of publication of application: 14.12.2016
(73) Proprietor: Danmarks Tekniske Universitet, 2800 Kgs. Lyngby (DK)
(72) Inventor: FEHRMANN, Rasmus, DK-2100 Copenhagen Ø (DK); RIISAGER, Anders, DK-2630 Taastrup (DK); SHUNMUGAVEL, Saravanamurugan, Mohali-140306 (IN)
(74) Representative: Zacco Denmark A/S
(86) International application number: PCT/EP2015/050546
(87) International publication number: WO 2015/107060

(56) References cited:
- JP-A- 2010 214 324
- US-A- 5 314 852
- US-A1- 2012 153 223
- US-A1- 2012 204 717
- BRETT F. GOODRICH ET AL: "Effect of Water and Temperature on Absorption of CO 2 by Amine-Functionalized Anion-Tethered Ionic Liquids", THE JOURNAL OF PHYSICAL CHEMISTRY B, vol. 115, no. 29, 28 July 2011 (2011-07-28), pages 9140-9150, XP055123249, ISSN: 1520-6106, DOI: 10.1021/jp2015534 cited in the application
- YING-YING JIANG ET AL: "Tetraalkylammonium amino acids as functionalized ionic liquids of low viscosity", CHEMICAL COMMUNICATIONS, no. 4, 9 November 2007 (2007-11-09), page 505, XP055045225, ISSN: 1359-7345, DOI: 10.1039/b713648j
- HELENE KOLDING ET AL: "COCapture technologies: Current status and new directions using supported ionic liquid phase (SILP) absorbers", SCIENCE CHINA CHEMISTRY, SP SCIENCE CHINA PRESS, HEIDELBERG, vol. 55, no. 8, 18 July 2012 (2012-07-18), pages 1648-1656, XP035095874, ISSN: 1869-1870, DOI: 10.1007/S11426-012-4683-X

## Description

### Field of the invention

The present invention concerns the absorption and desorption behaviour of carbon dioxide (CO₂) using mono-amine functionalized amino acids.

### Background of the invention

Carbon dioxide is recognized as a greenhouse gas that contributes to climate changes. A major cause of CO₂ emission is from combustion of fossil fuels like oil and coal in production of electricity and heat. The world consumption of coal is expected to increase by 49% in 2030 and accordingly much attention has been focused on reducing CO₂ emission from power plant flue-gas streams. Currently, aqueous solutions of organic amines are being used to capture CO₂ in scrubbers as carbamates despite concerns about, e.g. low absorbent capacity and energy intensive regeneration by desorption, which may require up to one-third of the total energy output from the power plant. Other technical challenges with amine sorbents include corrosion of steel pipes and pumps as well as thermal and chemical decomposition. In addition concern has been expressed about emission of the amines to the atmosphere leading to serious human health hazards. Solid absorbers also work unsatisfactorily among others due to the high desorption energy required to desorb CO₂ and regenerate the absorber.

In order to overcome these inherent problems, it is highly desired to develop a viable and energy-efficient technology for CO₂ capture by use of alternative, suitable absorbents.

Ionic liquids (ILs) are promising candidates as absorbents in CO₂ removal due to their relatively high thermal stability, exceptionally low vapour pressure and tuneable physicochemical properties [see eg. F. Jutz et al. Chem. Rev. 2011, 111, 322; and J. Huang et al. Aust. J. Chem. 2009, 62, 298]. There have been many reports on CO₂ capture using common ILs (typically referred to as first-generation ionic liquids), and a maximum CO₂ absorption capacity of 0.75 in mole fraction of CO₂ has been found for [C₃MIM][PF_{6]} (1-methyl-3-octylimidazolium hexafluorophosphate) at 40°C under 93 bar pressure [see eg. L.A. Blanchard, Z. Gu, Joan F. Brennecke, J. Phys. Chem. B 2001, 105, 2437; Z. Gu, Joan F. Brennecke, J. Chem. Eng. Data 2002, 47, 339; and Sudhir N. V. K. Aki, Berlyn R. Mellein, Eric M. Saurer, Joan F. Brennecke, J. Phys. Chem. B 2004, 108, 20355]. The CO₂ absorption capacity of these kinds of ILs is, however, limited due to the relatively weak physisorption taking place between the IL and CO₂. To circumvent this drawback, Davis and co-workers developed task-specific ionic liquids (TSILs) which are able to chemically bind CO₂ to amine-functionalised imidazolium-based IL at ambient conditions. Even though these TSILs form a chemical bond with CO₂ the absorption capacity was only 0.5 mol of CO₂ per mol of IL (mole ratio of 0.33) due to intermolecular carbamate formation (i.e. a 1:2 mechanism) [see Eleanor D. Bates et al., J. Am. Chem. Soc. 2002, 124, 926].

Zhang et al. have proposed a new mechanism for the formation of carbamic acid after CO₂ absorption in phosphonium-based amino acid functionalised ILs [J. Zhang, S. Zhang, K. Dong, Y. Zhang, Y. Shen, X. Lv. Chem. Eur. J. 2006, 12, 4021]. In this mechanism, one mol of CO₂ also reacted with two moles of IL. However in presence of water (1 wt.%), the IL could absorb an equimolar amount of CO₂ via a bicarbonate mechanism (mole ratio of 0.5). Recently, the formation of carbamic acid in amino acid-based ILs was further confirmed by Brennecke and co-workers by examining proline and methionine functionalised phosphonium-based ILs for CO₂ absorption. Here it was shown that one mol of IL can absorb one mol of CO₂ (1:1 mechanism) [see B. E. Gurkan, J. C. de la Fuente, E. M. Mindrup, L. E. Ficke, B. F. Goodrich, E. A. Price, W. F. Schneider, J. F. Brennecke, J. Am. Chem. Soc. 2010, 132, 2116]. A few other reports have also published equimolar amount of CO₂ absorption in functionalised ILs, but the typical CO₂-absorption capacity for published IL based solutions is substoichiometric rather than super-stoichiometric.

Chemical absorption (chemisorption) of CO₂ was first observed in imidazolium acetates, where the CO₂ can be trapped either as bicarbonate or, as recently found, also as a carboxylate on carbon position 2 of the imidazole via a carbene mechanism [US 2005/0129598 US 5,336,298; Maginn, E., DOE Report, quarterly, 01/05- 03/05 2005, 1-12, DOE Scientific and Technical Information, Oak Ridge, TN]. This was recently proven by Rogers and co-workers upon determination of its crystal structure [Gurau G et al. Angew Chem Int Ed, 2011, 50:12024-12026]. However, amine functionalized ILs have proven to have a higher CO₂ uptake stoichiometry and has attracted more attention.

If an amine functionality is linked to the cation, intermolecular carbamate formation takes place resulting in a maximum stoichiometry of 0.5 moles of CO₂ per mol of IL [Galan Sanchez L et al., Solvent properties of functionalized ionic liquids for CO2 absorption, Chem Engineer Res Design, 2007, 85: 31-39; and Soutullo M et al., Reversible CO2 capture by unexpected plastic-, resin-, and gel-like ionic soft materials was discovered during the combi-click generation of a TSIL library, Chem Mater, 2007, 19: 3581-3583]. This has been demonstrated for imidazolium-based cations, where the amine is introduced on one of the alkyl chains. A major drawback of this method is that the already high viscosity of the IL becomes much higher when attaching another functional group to the IL. The important point is, however, that these compounds show much higher CO₂ uptake than their non-functionalized counterparts.

If the amine functionality is attached to the anion of the IL, carbamate species also form, but there is a possibility that the negatively charged functionality on the anion can take up the proton released upon CO₂ capture forming carbamic acid. Then CO₂ can be absorbed with a stoichiometry of up to 1:1, meaning much more efficient use of the IL. However, in most cases, the absorption capacity still corresponds to 0.5:1. This could very well be related to residual water in the IL interfering with the released proton, preventing it from protonating the anionic part.

Therefore it must be concluded that despite growing demand, there has not yet been suggested a satisfactory and economically feasible technical solution to the problem of removing CO₂ from e.g. flue gases which has a high sorption efficiency, a high capacity and a sufficient robustness to allow for uninterrupted performance over long time periods.

### Summary of the invention

It has surprisingly been found that compositions comprising ionic liquids (ILs) based on simple tetraalkylammonium salts of amine functionalized amino acids are excellent absorbers of CO₂ having high sorption efficiencies. In particular it has been found that super-stoichiometric absorption of high amounts of CO₂ at ambient temperature and pressure (i.e. 2 mol CO₂ per mol IL) is observed for specific compositions. The IL may be adsorbed on a porous (including mesoporous) material.

**In a first aspect** the present invention therefore provides a composition for absorption/desorption of gaseous carbon dioxide (CO₂), the composition comprising an ionic compound comprising a cation **[A⁺]** and an anion **[B⁻],** wherein the anion **[B⁻]** is a mono-amine functionalized amino acid and the cation **[A⁺]** is given by the formula: 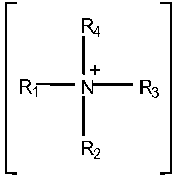 wherein R₁ is a Cₙ alkyl chain where n is an integer having a value of at least 10 and not more than 30, and R₂, R₃ and R₄ are individually selected from the group of methyl, ethyl, propyl, butyl, pentyl, hexyl, heptyl and octyl.

By the above is obtained an absorption of CO₂ gas at ambient conditions corresponding to unprecedented 2.0 ± 0.1 mol of CO₂ per mol of IL. This is significantly higher than previous observed results.

At elevated temperature, the absorption capacity of the composition is observed to drop to 1 mol CO₂ per mol of IL, demonstrating that it is possible to desorb the CO₂ gas under CO₂-rich conditions by temperature-swing absorption. By changing the temperature and/or pressure and keeping the composition at these conditions for a longer period of time, it is possible to desorb all the absorbed CO₂. Moreover, an improved performance after a first cycle in consecutive sorption cycles is advantageously observed by the composition according to the first aspect of the invention.

By the composition according to the first aspect of the invention, formation of carbamic acids by reaction of CO₂ with the amine groups according to a 2:1 mechanism is obtainable.

**In a second aspect** the invention provides a method for absorption of gaseous CO₂ from a gas stream, the method comprising contacting said gas stream with a composition according to the **first aspect** of the invention.

**In a third aspect** the invention also provides a method for desorption of the absorbed CO₂ absorbed on a composition according to the **first aspect** of the invention, the method comprising increasing the temperature of the composition and/or decreasing the total pressure surrounding it and/or by flushing it with a gas stream with no or lower CO₂ content than the gas stream originally applied for the absorption.

### Figures

Figure 1 shows the CO₂ absorption of different ionic liquids comprising selected naturally occurring amino acids.
Figure 2 shows the CO₂ absorption of [N₆₆₆₁₄][Lys] IL at different temperatures.
Figures 3a and 3b show the ¹H-NMR spectra of [N₆₆₆₁₄][Lys] before saturation and after saturation, respectively.
Figure 4 shows three consecutive sorption cycles of [N₆₆₆₁₄][Lys].
Figure 5 shows a reaction scheme showing the proposed mechanism for the proton migration under CO₂ chemisorption on amine group.
Figures 6a-b show selected in situ FTIR spectra of CO₂ absorption (figure 6a) and desorption (figure 6b) of [P66614][Lys] (upper part) and [N66614][Lys] (lower part).
Figure 7 show the full region spectra of (a) [N66614][Lys] under dry CO₂ conditions, (b) [N66614][Lys] under humid CO₂ conditions, (c) [P66614][Lys] under dry CO₂ conditions and (d) [P66614][Lys] under humid CO₂ conditions.
Figure 8 shows a table with a description of the modes highlighted with grey boxes in figure 6a.
Figures 9a-b show the species described in the table in figure 8.
Figure 10 shows quantitative estimates of the carboxylic acid concentration under different humidity concentrations for two ionic liquids as a function of time during CO₂ exposure. The data is based on the sum of the areas of the deconvoluted spectra of the carboxylic acid C=O stretching bands displayed in figure 7 at around 1700-1695 cm⁻¹, 1670-1660 cm⁻¹ and 1640-1635 cm⁻¹.
Figure 11 shows quantitative estimates of carboxylic acid concentration as a function of time during CO₂ exposure for (a) [N66614][Lys] under dry CO₂ conditions, (b) [N66614][Lys] under humid CO₂ conditions, (c) [P66614][Lys] under dry CO₂ conditions and (d) [P66614][Lys] under humid CO₂ conditions.
Figure 12 shows determination of linear rates from spectral data displayed in figure 7, for (a) [N66614][Lys] under dry CO₂ conditions, (b) [N66614][Lys] under humid CO₂ conditions, (c) [P66614][Lys] under dry CO₂ conditions and (d) [P66614][Lys] under humid CO₂ conditions .
Figure 13 shows the very low signal band at around 2335 cm⁻¹ in the in situ FTIR spectra of [N₆₆₆₁₄][Lys] (lower part) and of [P₆₆₆₁₄][Lys] (upper part).
Figure 14 shows TGA data for different functionalized ionic liquids.

### Detailed description of the invention

The inventors have found that compositions comprising specifically selected ionic liquids (ILs) unexpectedly are excellent absorbers of CO₂ and are having high sorption efficiencies. Thus, adsorption of super-stoichiometric amounts of CO₂ at ambient temperature and pressure (i.e. 2 mol CO₂ per mol IL), are observed. All super-stoichiometric uptakes seem to be able to be explainable by chemosorption. The ILs are also excellent absorbers of CO₂ and are having high sorption efficiencies when adsorbed on high area, porous (including mesoporous) inert materials.

**In a first aspect** the present invention therefore provides a composition for absorption/desorption of gaseous carbon dioxide (CO₂). The composition comprises an ionic compound comprising a cation **[A⁺]** and an anion **[B⁻],** wherein wherein the anion **[B⁻]** is a mono-amine functionalized amino acid and the cation **[A⁺]** is given by the formula: 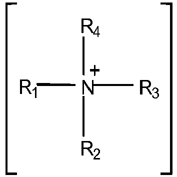 wherein R₁ is a Cₙ alkyl chain where n is an integer having a value of at least 10 and not more than 30, and R₂, R₃ and R₄ are individually selected from the group of methyl, ethyl, propyl, butyl, pentyl, hexyl, heptyl and octyl.

Throughout the present application the following abbreviations will be used:
[N66614] = trihexyltetradecylammonium; [N44414] = tributyltetradecylammonium
[N66616] = trihexylhexadecylammonium; [N44416] = tributylhexadecylammonium

In one or more embodiments R₂, R₃ and R₄ are alkyl chains of identical length.

In one or more embodiments R₁ is a Cₙ alkyl chain where n is an integer having a value of between 10 and 20.

In one or more embodiments R₂, R₃ and R₄ are individually selected from butyl, pentyl, hexyl, heptyl and octyl.

In one or more embodiments R₁ is selected from C₁₄H₂₉ and C₁₆H₃₃, and R₂, R₃ and R₄ are individually selected from butyl and hexyl.

In one or more embodiments the cation is one of the following ammonium ions:

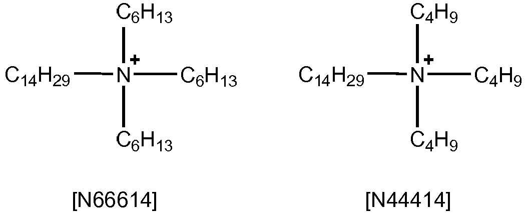

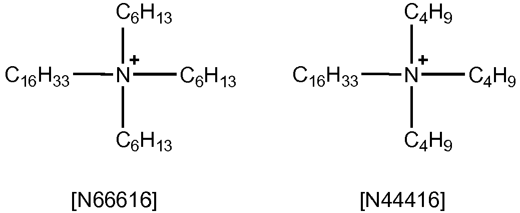

In one or more embodiments the cation is [N66614].

In one or more embodiments the cation is [N66616].

In one or more embodiments the cation is [N44414].

In one or more embodiments the cation is [N44416].

In one or more embodiments the anion selected from lysine (Lys), histidine (His), asparagine (Asn), glutamine (Gln). These four amino acids are all having an amine group in addition to the α- amine group; such amino acids can also be called mono-amine functionalized amino acid.

In one embodiment the anion selected from proline (Pro) or tryptophan (Trp).

In one or more embodiments, the anion is a mono-amine functionalized amino acid selected from one of the following mono-amine functionalized amino acids:

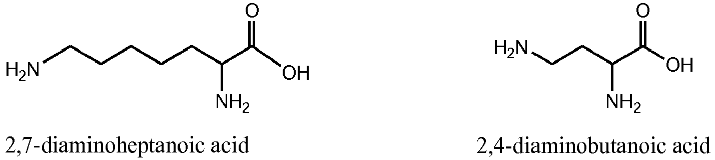

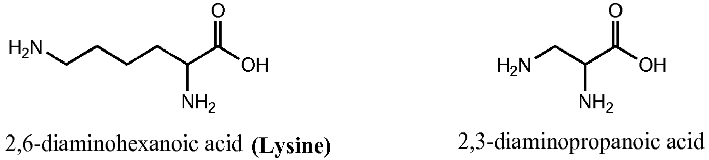

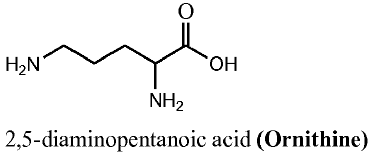

In one or more embodiments the ionic compound is selected from [N44414][Lys], [N44414][Asn], [N44414][Gln] or [N44414][His].

In one or more embodiments the ionic compound is selected from [N44416][Lys], [N44416][Asn], [N44416][Gln] or [N44416][His].

In one or more embodiments the ionic compound is selected from [N66614][Lys], [N66614][Asn], [N66614][Gln] or [N66614][His].

In one or more embodiments the ionic compound is selected from [N66616][Lys], [N66616][Asn], [N66616][Gln] or [N66616][His].

In one or more embodiments the ionic compound is [N66614][Lys].

In one or more embodiments the ionic compound is [N66614][Asn].

In one or more embodiments the ionic compound is [N66614][Gln].

In one or more embodiments the ionic compound is [N66614][His].

In one or more embodiments the composition further comprises a high surface area porous inert material such as e.g. a high surface area mesoporous inert material

In one or more embodiments the high surface area porous inert material is selected from high surface area inorganic, carbonaceous or polymeric materials such as, but not limited to, silica, alumina, titania, zirconia or clays, or mixtures hereof.

In one or more embodiments, the IL is adsorbed on the high surface area porous inert material, the combined structure referred to as an supported ionic liquid phase (SILP) material.

In one or more embodiments the porous inert material is selected from **Silica gel 90** (mesh size 80-120, mean pore diameter 74 Å, pore distribution ±7:0%, pore volume 0.47 cc/g, surface area 152.7 m²/g).

In one or more embodiments the composition according to the **first aspect** of the invention contains between 5-45 % w/w of the ionic compound, such as 10% w/w, 20% w/w, 30% w/w or 40% w/w. Preferably, the ionic compound is selected from [N66614][Lys], [N66614][Asn], [N66614][Gln] or [N66614][His].

In one or more embodiments the composition according to the **first aspect** of the invention contains about 40% w/w of an ionic compound selected from [N66614][Lys], [N66614][Asn], [N66614][Gln] or [N66614][His].

In one or more embodiments, the composition of the **first aspect** has a total CO₂ absorption capacity of over about 2 mol CO₂/mol ionic liquid, such as over 1.8 mol CO₂/ mol ionic liquid, over 1.9 mol CO₂/ mol ionic liquid, over 2.0 mol CO₂/ mol ionic liquid, or over 2.1 mol CO₂/ mol ionic liquid.

In one or more embodiments, the composition of the **first aspect** has a total CO₂ absorption capacity of over about 11.0% w/w CO₂, such as over 11.5% w/w CO₂, over 11.7% w/w, over 12.0% w/w, over 12.5% w/w, over 12.8% w/w or over 13.1% w/w.

**In a second aspect** the invention provides a method for absorption of gaseous CO₂ from a gas stream, the method comprising contacting said gas stream with a composition according to the **first aspect** of the invention.

In one or more embodiments, the invention provides a method according to the **second aspect** of the invention, wherein the absorption takes place from a gas stream which contains 1 - 100 mol% CO₂, or preferably 2 - 60 mol% CO₂, or more preferably 3 - 25 mol% CO₂ with an absorption capacity of approximately 2 mol CO₂/mol of the ionic compound. The contact between the gas stream and the composition can take place in a suitable reactor such as a fixed-bed or movable-bed reactor using an appropriately shaped form of the composition which provides low resistance to the gas stream and low pressure drop across the reactor.

In one or more embodiments, the gas stream is a flue-gas stream generated from combustion by large point stationary sources such as power plants.

In one or more embodiments, the gas stream contains less than about 15% CO₂ such as 15% CO₂, 14% CO₂, 13% CO₂, 12% CO₂, 11% CO₂, 10% CO₂, 9% CO₂ or between 10-15% CO₂.

In one or more embodiments,, the gas stream contains significant amounts of water vapor, such as 3-5% H₂O, 5-7% H₂O, 7-10% H₂O, 10-12% H₂O, 12-14% H₂O 14-16% H₂O or more than 16% H₂O.

The compositions of the invention may be part of a composite material e.g. combined with fiber materials or other materials which improve the mechanical strength, but do not lower gas diffusion severely.

**In a third aspect** the invention also provides a method for desorption of the absorbed CO₂ absorbed on a composition according to the **first aspect** of the invention, the method comprising increasing the temperature of the composition and/or decreasing the total pressure surrounding it and/or by flushing it with a gas stream with no or lower CO₂ content than the gas stream originally applied for the absorption.

When the amine functionalized amino acid ammonium-based ionic liquids (ILs) absorbs CO₂ at a super-equimolar CO₂ absorption capacity of approximately 2 mol of CO₂ per mol of IL at 1 bar pressure it is a 2:1 mechanism.

**In a fourth aspect** the invention also provides for the use of a composition according to the above description for the removal of CO₂ in stationary plants such as e.g. power plants, or a flue-gas stream in a power plant.

### Experimental

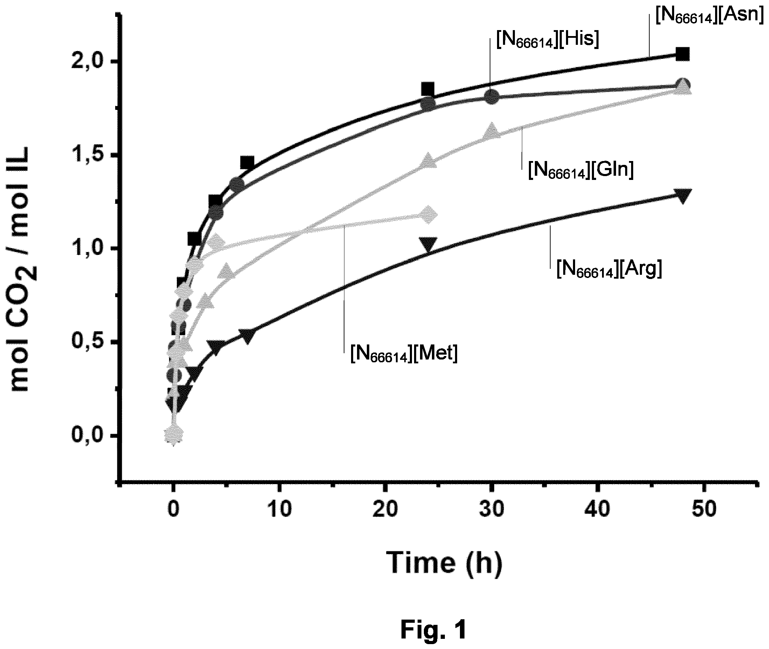

ILs based on the naturally occurring amino acids lysine (Lys), histidine (His), asparagines (Asn), glutamine (Gln), arginine (Arg) and methionine (Met) are employed for the CO₂ absorption study displayed in figure 1 and measured at room temperature (22 °C).

The absorption process has been studied with the lysine-based IL trihexyl(tetradecyl)ammonium lysinate ([N₆₆₆₁₄][Lys]) by in situ ATR-FTIR to obtain mechanistic insight on the formation of carbamic acid. The pathway for the formation of the [N₆₆₆₁₄][Lys]-CO₂ adduct is shown in reaction scheme 1 indicating that two CO₂ molecules chemically binds to each a nitrogen in the two amine groups.

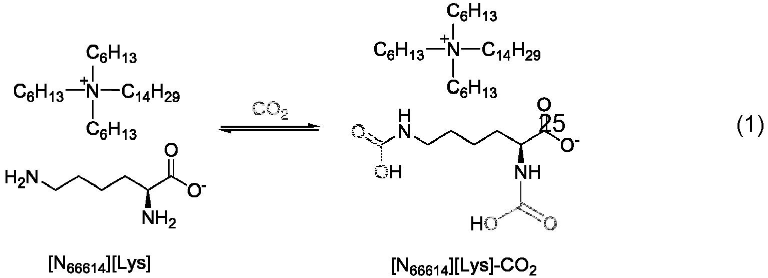

The results are discussed and correlated with mechanistic implications from DFT calculations in the following.

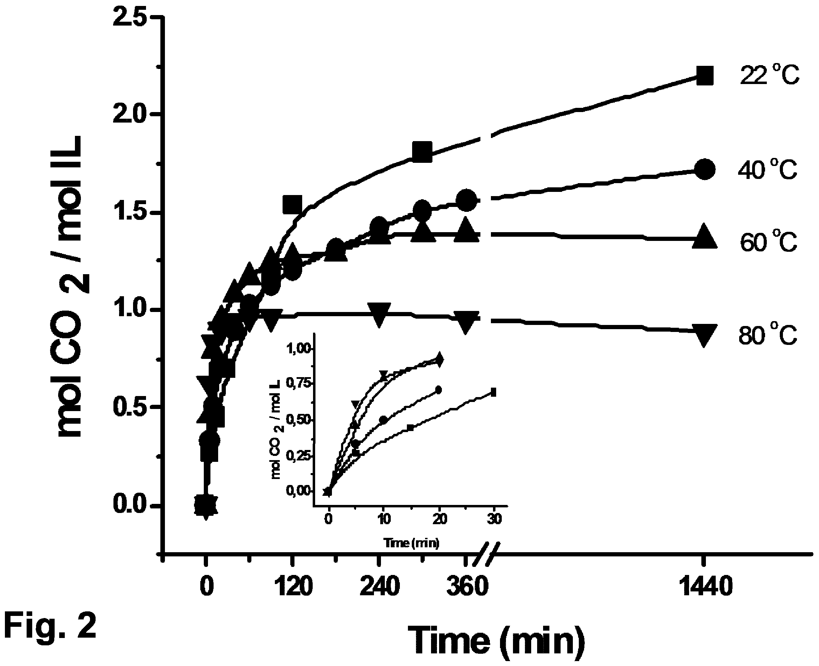

Gravimetric CO₂ capacity measurements were initially performed with the series of mono-amine functionalized amino acid ILs; [N₆₆₆₁₄][Lys], [N₆₆₆₁₄][Asn], [N₆₆₆₁₄][Gln] and [N₆₆₆₁₄][His] after gas-saturation at ambient conditions. All the ILs showed a remarkable CO₂ absorption capacity equal to 2.0 ± 0.1 mol of CO₂ per mol of IL (3.1-3.5 mol CO₂ per kg of IL, 11.7-13.1 wt.% CO₂) after 24-48 h gas-saturation at ambient conditions. The results [N₆₆₆₁₄][Asn], [N₆₆₆₁₄][Gln], [N₆₆₆₁₄][His], [N₆₆₆₁₄][Arg] and [N₆₆₆₁₄][Met] are shown in figure 1 and the results summarized in table 1, which also includes the results for [N₆₆₆₁₄][Lys] (displayed separately at different temperatures in figure 2) and, for comparison, the lysine-based phosphonium IL [P₆₆₆₁₄][Lys].

| **Table 1.** CO₂ absorption capacity in amine functionalized amino acid ionic liquids | | | | |
|---|---|---|---|---|
| Ionic liquid | Time (h) | CO₂ uptake | | |
| | | Mol CO₂/mol IL^{[*]} | Mol CO₂/kg IL^{[*]} | Wt.% |
| [N₆₆₆₁₄][Lys] | 24 | 2.1 | 3.5 | 13.1 |
| [N₆₆₆₁₄][Asn] | 24 | 1.9 | 3.3 | 12.0 |
| | 48 | 2.0 | 3.4 | 13.1 |
| [N₆₆₆₁₄][Gln] | 24 | 1.5 | 2.5 | 9.5 |
| | 48 | 1.9 | 3.2 | 11.7 |
| [N₆₆₆₁₄][H is] | 24 | 1.8 | 3.0 | 11.1 |
| | 48 | 1.9 | 3.1 | 11.7 |
| [N₆₆₆₁₄][Arg] | 24 | 1.0 | 1.6 | 6.6 |
| | 48 | 1.3 | 2.1 | 8.1 |
| [N₆₆₆₁₄][Met] | 4 | 1.0 | 1.6 | 6.9 |
| | 24 | 1.2 | 1.9 | 7.8 |
| [P₆₆₆₁₄][Lys] | - | 1.4^{[**]} | 2.3^{[**]} | 8.7^{[**]} |
| | 48 | 1.6 | 2.6 | 9.9 |
| [*] Relative error estimated to ± 0.1, [**] B. F. Goodrich, J. C. de la Fuente, B. E. Gurkan, Z. K. Lopez, E. A. Price, Y. Huang, J. F. Brennecke, J. Phys. Chem. 2011, 115, 9140. | | | | |

The results shown in figure 1 and summarized in table 1 suggested that both amine groups in the anions have reacted completely with CO₂ to form [N₆₆₆₁₄][anion]-CO₂ adducts after at the latest 48 hours, as shown in reaction scheme 1 for the IL [N₆₆₆₁₄][Lys].

Figure 2 shows that during absorption in the [N₆₆₆₁₄][Lys] IL at 22 °C a steep increase of CO₂ absorption is observed which reaches a mol ratio of 1.54 after 3 h, thus implying fast CO₂ absorption dynamics. The slower absorption rate found after 3 h could in part be due to formation of a hydrogen bonding network making the IL more viscous, thus limiting CO₂ diffusion. However, FT-IR results support a more direct chemical explanation of this decrease in rate, as discussed later.

In contrast to the homologous series of mono-amine functionalized ILs, the multi-amine [N₆₆₆₁₄][Arg] IL (line with upside down triangles in figure 1) proved to have a significant slower absorption dynamics, and six days were required to reach absorption of two mol CO₂ under identical experimental conditions. Furthermore, the non-functionalized IL [N₆₆₆₁₄][Met] (line with tilted squares in figure 1) absorbed only 1.2 mol of CO₂ per mol of IL (1.9 mol CO₂ per kg of IL) corresponding to a 1:1 mechanism with an additional amount of gas being physisorbed.

Brennecke and co-workers [B. F. Goodrich, J. C. de la Fuente, B. E. Gurkan, Z. K. Lopez, E. A. Price, Y. Huang, J. F. Brennecke, J. Phys. Chem. 2011, 115, 9140.] have recently reported that the lysine-based phosphonium IL [P₆₆₆₁₄][Lys] absorbed CO₂ corresponding to a mol ratio of 1.4 under ambient conditions. In this study, we found the absorption capacity to be 1.6 mol of CO₂ per mol of IL (2.6 mol CO₂ per kg of IL) in relative good agreement with the earlier results. More importantly, it unambiguously confirming that [N₆₆₆₁₄][Lys] showed a considerable higher CO₂ absorption capacity than the corresponding [P₆₆₆₁₄][Lys], thus emphasizing the importance of the cation in the system.

Figure 2 show the influence of the temperature on CO₂ absorption studied for [N₆₆₆₁₄][Lys] between room temperature and 80 °C as a function of time. The initial rate of absorption increases when the temperature is increased while the absorption capacity decreases, as expected. Hence, after 5 min absorption at 80 °C the CO₂ mol ratio was 0.62, which is 2.3 times higher than at room temperature (see the insert of figure 2).

After 40 min absorption at 80 °C, the CO₂ absorption capacity reaches a steady-state of about 1 mol CO₂ per mol of IL. Notably, a small mass loss occurs with prolonged treatment at 80 °C under CO₂-rich conditions, implying that the [N₆₆₆₁₄][Lys]-CO₂ adduct is not thermally stabile at this temperature. Nonetheless, a change in CO₂ absorption capacity by a factor of two induced by a moderate temperature change of 60 °C is very interesting for temperature-swing operated capture processes.

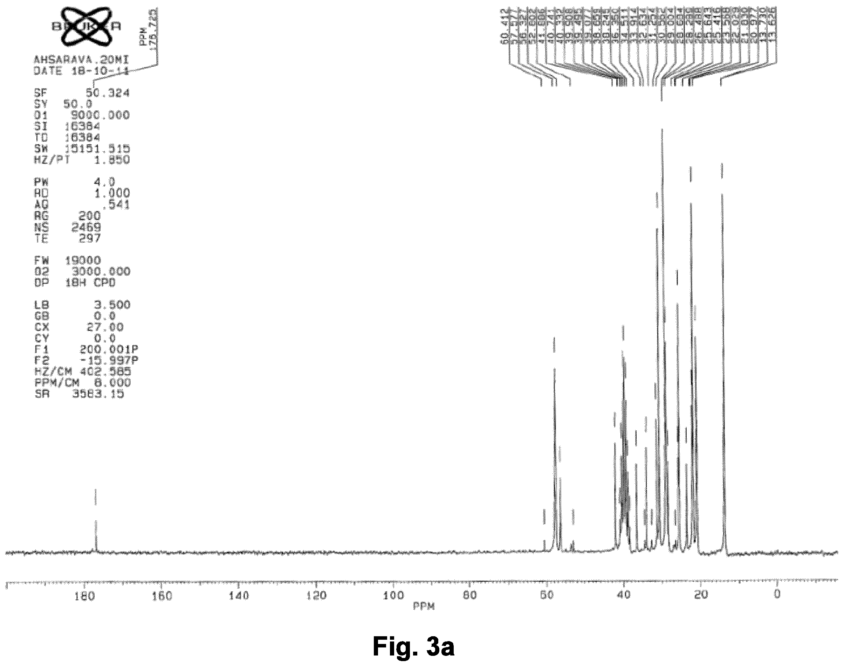

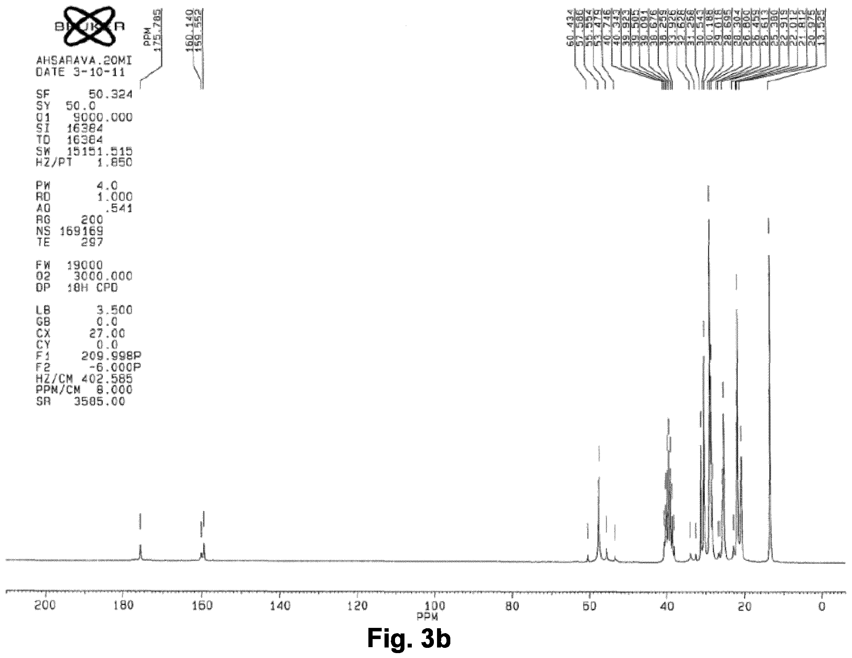

To examine the reactivity of the mono-amine functionalized ILs in more detail, [N₆₆₆₁₄][Lys], [N₆₆₆₁₄][Asn] and [N₆₆₆₁₄][Gln] were analysed by NMR prior to and after saturation with CO₂ for 20 min. Figures 3a and 3b show the results for [N₆₆₆₁₄][Lys] before saturation and after saturation, respectively.

In all the ¹H-NMR (300 MHz, Bruker, DMSO-d⁶) spectra, the signals from the hydrogens on the carbons neighbouring the two amine groups were shifted downfield after interaction with CO₂. Hence, in the case of [N₆₆₆₁₄][Lys] the signal from the methylene group bonded to the free amine group (H₂N-CH₂-) shifted from 2.5 to 2.9 ppm, while the hydrogen on the carbon next to the amino acid group (-OOC-CH-(NH₂)-) shifted from 2.7 to 3.4 ppm after CO₂ absorption. Similarly, two new carbon signals appeared in ¹³C-NMR (50 MHz, Bruker, DMSO-d⁶) for [N₆₆₆₁₄][Lys] after gas-saturation close to each other at 159.6 and 160.1 ppm, respectively, which could be ascribed to the formation of carbamic acid groups. A shift from 176.8 to 175.8 ppm of the signal from the carboxylate carbon further implied that the amine group of the amino acid moiety had reacted with CO₂. The results supports the hypothesis of [N₆₆₆₁₄][anion]-CO₂ adduct formation as shown in scheme 1.

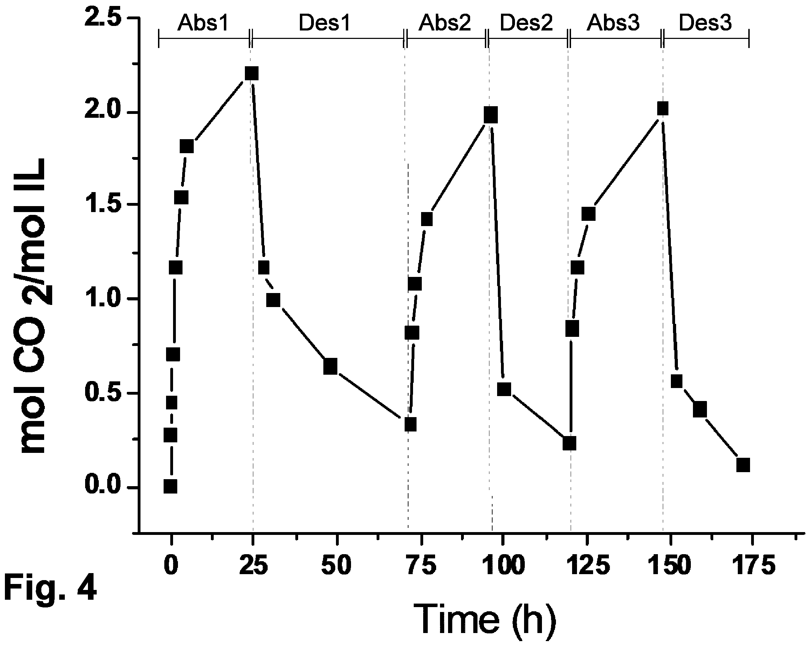

Following the promising results from the temperature study shown in figure 2a, the reusability of [N₆₆₆₁₄][Lys] in consecutive sorption cycles is next evaluated by performing CO₂ absorption at room temperature and 1 bar CO₂ and desorption at 80 °C under argon flow. The results from three sorption cycles are shown in Figure 4.

During the first desorption process (Des1), 50 % of the absorbed CO₂ (about 1 mol) was liberated after 5 h and 85 % only after 48 h. These results confirmed that the captured CO₂ can be desorbed at elevated temperature under a sweep gas flow, but the process is rather slow especially after the first mol of gas is liberated.

In the second and third sorption cycles (Abs2/Des2 and Abs3/Des3, respectively), the CO₂ absorption capacity remained around the original 2 moles of CO₂ per mol IL after 24 h. Interestingly, it proved here easier to desorb the gas than during the first cycle, thus resulting in initial release of 75 % of the gas (about 1.5 moles of CO₂), and more than 90 % of the absorbed gas was released after 24 h desorption. The reason behind the difference in desorption efficiency between the first and the following cycles is currently not clear, but could possibly be related to an initial structural reorganization taking place within the IL during the first sorption cycle.

An overall absorption mechanism for formation of carbamic acids by CO₂ chemisorption in amino acid based ILs has previously been suggested [J. Zhang, S. Zhang, K. Dong, Y. Zhang, Y. Shen, X. Lv. Chem. Eur. J. 2006, 12, 4021.] However, the more specific steps in the mechanism have to our knowledge not been discussed in further detail.

Here, the transition state energies for two different reaction routes of the first reaction step using DFT (B3LYP/6-31+G*) is performed, well aware that the energies is likely to be affected by the IL media. However, a solvent model and the cations are not included in the calculations, since solvent property data and diffraction data for the studied IL structures are not available. Without such experimental data inclusion of cations with specific conformations would most likely not led to an enhancement of the model.

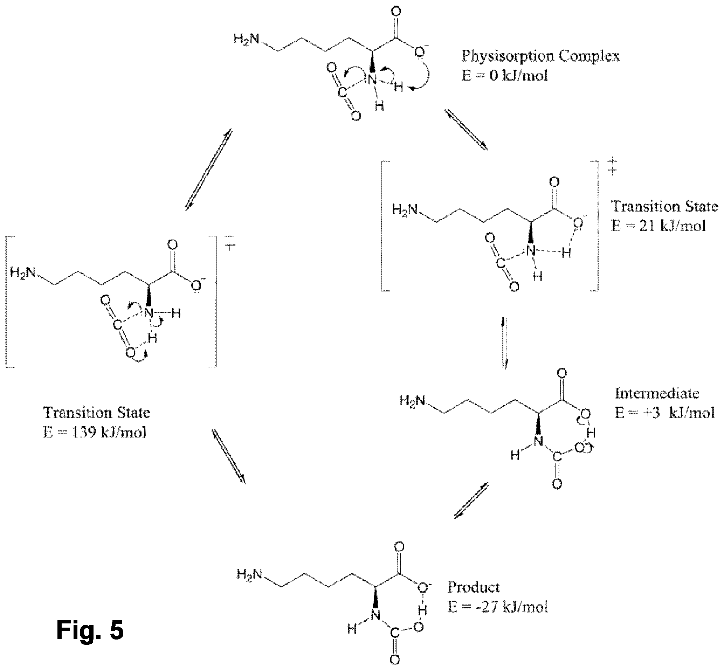

In the first and most simple reaction route, the chemisorption of CO₂ to the amine group is an elemental reaction, where the proton migrates from the amine to an oxygen atom of the incoming CO₂ molecule. The transition state for this direct one-step proton migration is found to be 139 kJ/mol (relative to the initial physisorption complex). This seems to be a too high value to describe the initial fast reaction rates observed at room temperature for the reaction scheme in figure 5 showing the proposed mechanism for the proton migration under CO₂ chemisorption on amine group. Calculations were performed with B3LYP/6-31+G(d) Gaussian09.

Therefore an alternative reaction route was investigated, where the proton temporarily forms a five-ring with the carboxylate group of the amino acid group. The transition state for this pathway has a comparable energy of only 21 kJ/mol. Despite the simplicity of the DFT model, this clearly suggest that the carboxylate group - due to its relative strong basicity - acts like an internal catalyst, which makes the reaction proceed at relatively high rates at room temperature.

To provide further mechanistic insight, the formation of the [N₆₆₆₁₄][Lys]-CO₂ and [P₆₆₆₁₄][Lys]-CO₂ adducts were also studied by in situ ATR-FTIR. In the setup a thin IL film was dispersed in the middle of the diamond, and was sealed with a special designed metal cap to allow control of the atmosphere over the film.

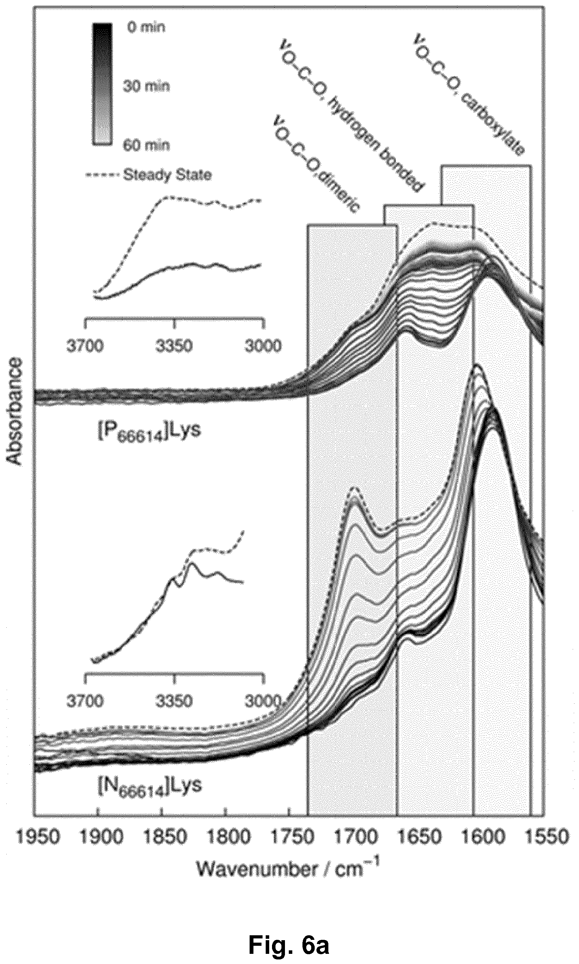

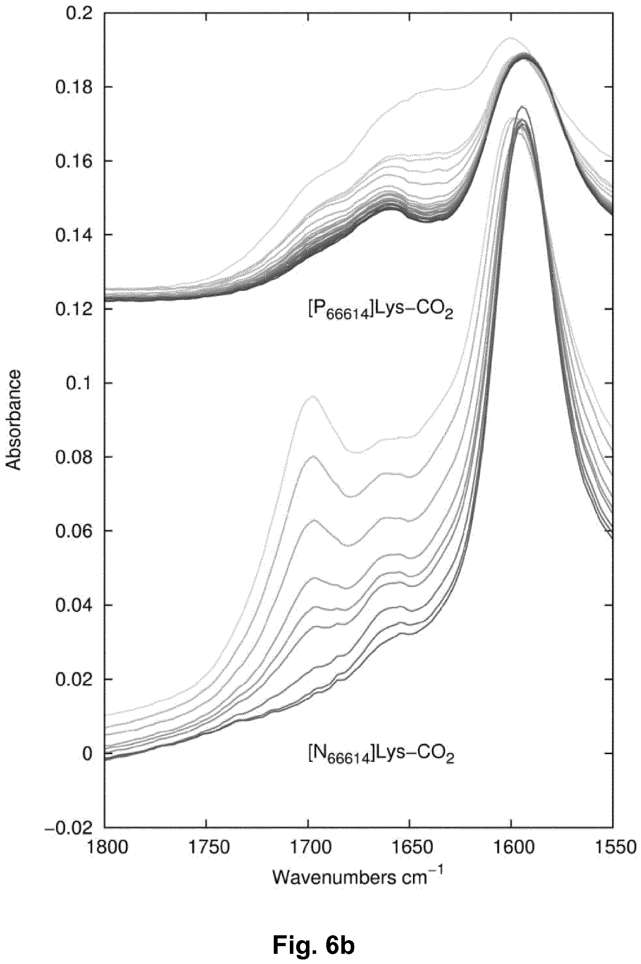

In figures 6a-b selected in situ FTIR spectra of the CO₂ absorption (figure 6a) and desorption (figure 6b) experiments are shown, where the upper part is in situ FTIR spectra of [P₆₆₆₁₄][Lys] and the lower part is in situ FTIR spectra of [N₆₆₆₁₄][Lys]. The absorption spectra in figure 6a are measured with the samples exposed to dry CO₂ (60% in He) and the desorption spectra in figure 6b are measured under helium flow at 80°C.

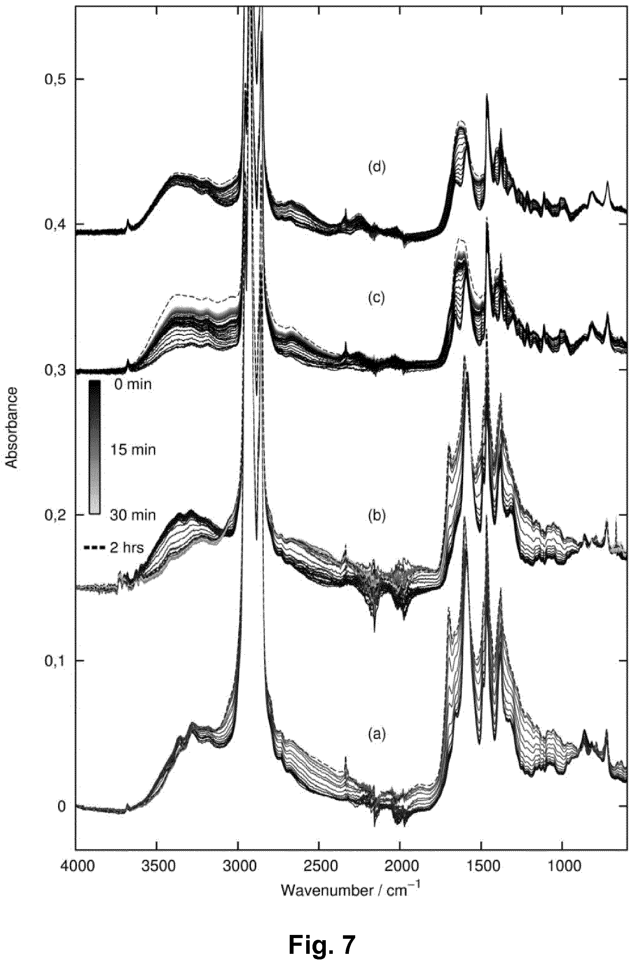

Figure 7, part (a) shows [N₆₆₆₁₄][Lys] under dry CO₂ conditions, part (b) [N₆₆₆₁₄][Lys] under humid CO₂ conditions, part (c) [P₆₆₆₁₄][Lys] under dry CO₂ conditions, and part (d) [P₆₆₆₁₄][Lys] under humid CO₂ conditions. The dark lines in both figures 6a-b and figure 7 correspond to initial times, lighter lines to later times and dashed lines to (pseudo) steady-state in the experiments.

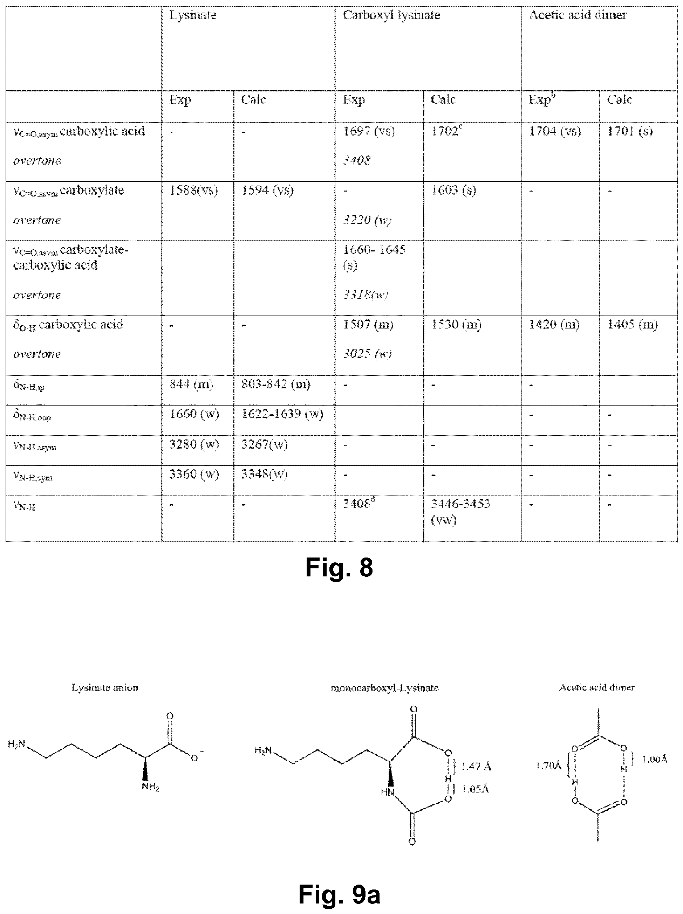

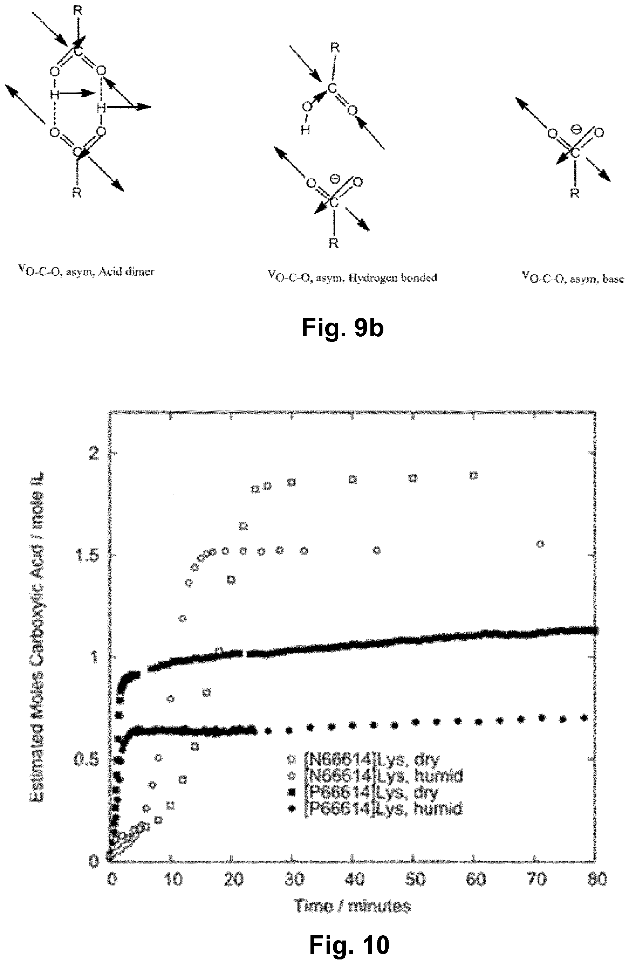

Figure 8 displays a table with a description of the modes highlighted with grey boxes in figure 6a, and figures 9a-b show the species described in the table in figure 8.

The initial spectrum of the [N₆₆₆₁₄][Lys] IL displayed in figure 6a reveals characteristic vibration **modes of the carboxylate group** (v_{O-C-O,asym} = 1588 cm⁻¹) and primary amines (V_{N-H} = 3360 and 3280 cm⁻¹, δ_{N-H} = 1660 and 844 cm⁻¹). Upon CO₂ exposure the modes of the primary amines in the IL disappeared. Simultaneously characteristic modes of a carboxylic **acid dimer** (v_{O-C-O,asym} = 1697 cm⁻¹) together with carboxylic acid species **hydrogen bonded to the carboxylate group** (v_{O-C-O,asym} = 1660-1645 cm⁻¹) appeared, as also reported previously.^{[10]} After a few minutes of gas exposure the rate of reaction apparently decreased drastically (as the reaction approached steady-state), and the band corresponding to the carboxylate group (v_{O-C-O,asym}) blue shifted around 15 cm⁻¹ indicating changes in the hydrogen bonding to the carboxylate group.

The series of spectra shown in figure 6b show the reversible desorption of CO₂ from the [N₆₆₆₁₄][Lys] IL (lower part) and [P₆₆₆₁₄][Lys] IL (upper part), which are analogous to the results of the absorption experiments shown in figure 2.

As the in situ FT-IR experiments are performed on a very thin IL film, the reaction time to approach steady-state is much shorter than for the bulk absorption experiments due to faster diffusion in the film layer. To get an estimate of the reaction kinetics for the IL-CO₂ adduct formation, the amount of carboxylic acids is quantified as function of time for selected ILs by integrating the deconvoluted bands of the v_{O-C-O,asym} of the carboxylic acid species. The results are shown in figure 10, which shows quantitative estimates of the carboxylic acid concentration as a function of time during CO₂ exposure (60 % in He). The estimate is based on the sum of the areas of the carboxylic acid C=O stretching bands at around 1700-1695 cm⁻¹, 1670-1660 cm⁻¹ and 1640-1635 cm⁻¹ of the deconvoluted spectra.

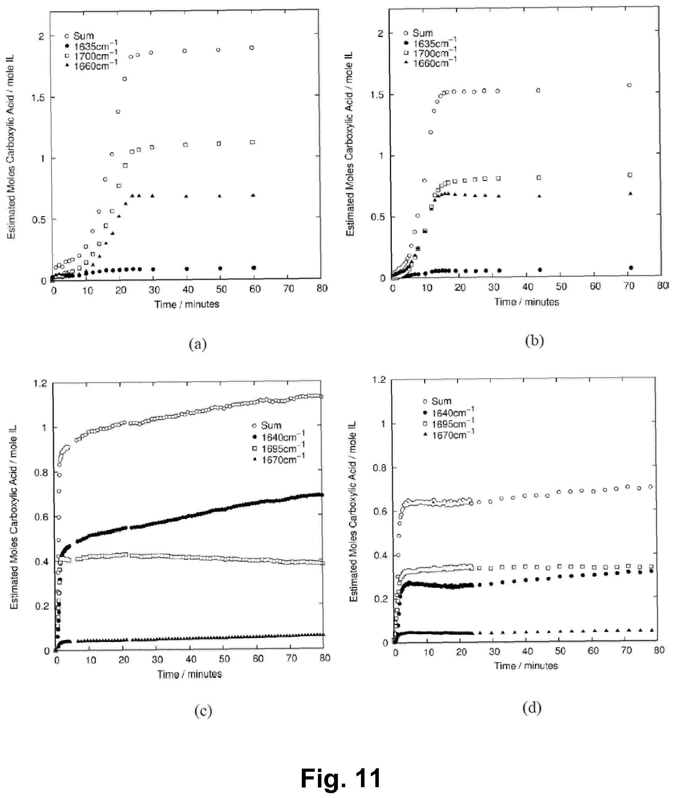

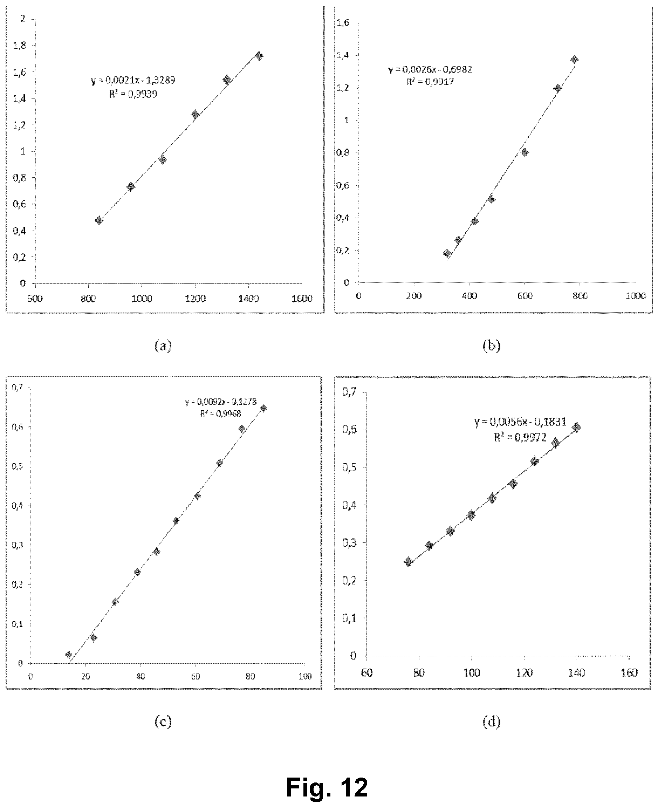

The details on each of these bands are shown in figure 11 and 12, where figure 11 shows quantitative estimates of carboxylic acid concentration as a function of time during CO₂ exposure. Estimate is based on the areas of the carboxylic acid C=O stretching bands at around 1700-1695 cm⁻¹, 1670-1660 cm⁻¹ and 1640-1635 cm⁻¹ of the deconvoluted spectra. Absolute scale on y axis is established from spectra of [N66614][Lys] exposed to CO₂ for 19 h assuming 2 mole of carboxylic acid per mol IL. Figure 12 shows determination of linear rates (mol s⁻¹) from spectral data corresponding to figure 7.

In both figure 11 and 12, part (a) shows [N₆₆₆₁₄][Lys] under dry CO₂ conditions, part (b) [N₆₆₆₁₄][Lys] under humid CO₂ conditions, part (c) [P₆₆₆₁₄][Lys] under dry CO₂ conditions, and part (d) [P₆₆₆₁₄][Lys] under humid CO₂ conditions.

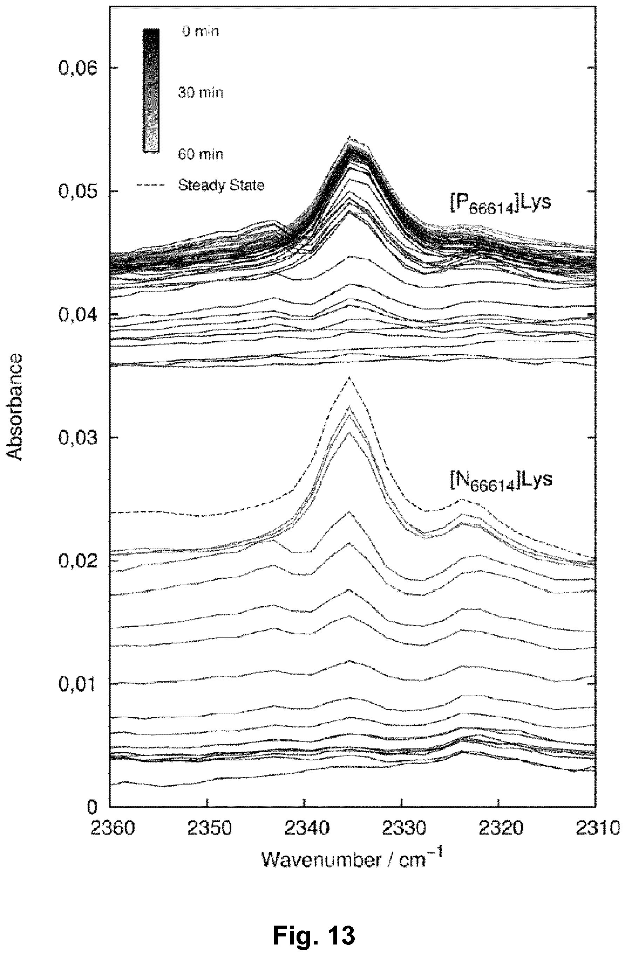

Initially, a non-linear diffusion controlled domain is observed for [N₆₆₆₁₄][Lys]. This domain is influenced by the viscosity of the IL as well as the specific thickness of the IL film on the ATR plate varying from experiment to experiment. At the same time almost no physisorbed CO₂ was observed in the spectra of [N₆₆₆₁₄][Lys] as it instantly reacts with the amine groups. This can be seen from the details in figure 13 showing the very low signal band at around 2335 cm⁻¹ in the in situ FTIR spectra of [N₆₆₆₁₄][Lys] (lower part) and of [P₆₆₆₁₄][Lys] (upper part).

After around 10-12 min of absorption the estimated development in carboxylic acid concentration approaches a linear rate corresponding to pseudo zero-order (see table 2). This interpretation is strongly supported by development in the physisorbed CO₂, which shows that the main CO₂ diffusion layer at this time reached the evanescent beam in the bottom of the film (see absorbance of physisorbed CO₂ at around 2335 cm⁻¹ in figure 13). Here, the kinetics is no longer controlled by diffusion limitations but by a reaction barrier for the reaction between CO₂ and the amine groups. This results in a linear development of the carboxylic acid product (i.e. pseudo zero-order reaction kinetics) and a slow net accumulation of physisorbed CO₂.

**Table 2**

| Experiment | Apparent rate (mol s⁻¹) | R² | Steady-state yield |
|---|---|---|---|
| [N₆₆₆₁₄][Lys] (dry) | 2.1.10⁻⁴ | 0.9940 | 2.00 mol (19 h)^{a} |
| [N₆₆₆₁₄][Lys] (1.1% water) | 2.6.10⁻⁴ | 0.9960 | 1.47 mol (4 h) |
| [N₆₆₆₁₄][Lys] (0.22% water) | 2.1.10⁻⁴ | 0.9950 | 1.43 (26 min)^{b} |
| [P₆₆₆₁₄][Lys] (dry) | 9.2.10⁻⁴ | 0.9968 | 1.10 (2 h) |
| [P₆₆₆₁₄][Lys] (2.0% water) | 56.10⁻⁴ | 0.9972 | 0.72 (2 h) |

| | | | |
|---|---|---|---|
| ^{a} This is assumed to be real steady-state and 2.00 mol from the adsorption experiments. ^{b} The number corresponds to a pseudo steady-state as the experiments were stopped before a real steady-state occurred. | | | |

As the reaction approached full conversion (i.e. complete reaction of CO₂ with the amine groups), the rate decreases and physisorbed CO₂ quickly accumulates in the IL resulting in a sudden shift of the carboxylate v_{O-C-O,asym}. As mentioned above, this may partly be explained by an increased viscosity of the system. Notably, however, the reaction rate decreases dramatically after 1.7-1.8 mol carboxylic acid per mol [N₆₆₆₁₄][Lys] had reacted, despite physisorbed CO₂ at this time is in surplus.

Considering the suggested mechanism, a likely explanation for this behaviour is that the carboxylic acid in the lysinate at this stage is so strongly hydrogen bonded to the carboxylate group that it no longer acts efficiently as a catalyst for the chemisorption of CO₂. It is also noticeable that no break on the absorption curve occurs before the 1.7-1.8 mol CO₂ per mol [N₆₆₆₁₄][Lys] is absorbed (see figure 2), thus suggesting equal reaction rates - and possibly similar mechanism for CO₂ absorption - at the two amine groups.

Several studies report that addition of water to ILs enhances the apparent CO₂ absorption rate due to a decrease in viscosity. For the [N₆₆₆₁₄][Lys] IL an increase of the first order chemisorption rate of about 20 % from 2.1.10⁻⁴ to 2.6.10⁻⁴ mol/s (see table 2) was observed, when the IL was saturated with a water concentration corresponding to 1.1 vol% in the gas stream. With lower water concentrations this rate enhancement is not observed, suggesting that water may stabilize a transition state in the critical proton migrating step in the mechanism - possibly by a push-pull type mechanism - facilitating the proton transfer. Accordingly, the steady-state CO₂ absorption capacity is also lowered in presence of water compared to the water free system, due to competitive hydrogen bonding of the water to the carboxylic acid-carboxylate pair as can be seen in figure 10.

As no significant cationic effect was made obvious from the theoretical studies, in-situ ATR-FTIR investigations is also performed on the [P₆₆₆₁₄][Lys] during CO₂ absorption and the results displayed in the top part of figure 6a. Here the dominant band for the carboxylic acid species formed during CO₂ absorption is not the dimeric 1700 cm⁻¹ band, as found for the [N₆₆₆₁₄][Lys] IL. Instead the band appearing at around 1640 cm⁻¹ is far more intense, thus indicating that the formed carboxylic acid groups preferentially pairs up with the carboxylate groups instead of forming dimers.

This interpretation is further confirmed by the observation of a fast shift in intensity of the carboxylate band at around 1590 cm⁻¹ simultaneously with the rise of the 1640 cm⁻¹ band, indicating a much stronger hydrogen bonding between carboxylic acid and carboxylate groups than seen during CO₂ absorption in [N_{66614]}Lys. Furthermore, the pseudo zero-order rate of CO₂ chemisorption is more than four times higher with [P₆₆₆₁₄][Lys] than for [N₆₆₆₁₄][Lys] (9.2.10⁻⁴ mol/s vs. 2.1.10⁻⁴ mol/s, as listed in table 2 until absorption reached about 0.9 mol CO₂ per mol IL. After this point - where the carboxylate groups are almost stoichiometric hydrogen bonded to the formed carboxylic acid and thus not catalytically effective for chemisorption - the rate decreases significantly with around three orders of magnitude. Afterwards chemisorption continues only slowly up to 1.5 mol CO₂ per mol IL, most likely by a very different mechanism having a much higher reaction barrier.

Another obvious difference in the spectra recorded during CO₂ absorption with [P₆₆₆₁₄][Lys] and [N₆₆₆₁₄][Lys] as shown in figure 6a is the appearance of a strong N-H stretching band at around 3400 cm⁻¹ for the phosphonium IL (see inserts on in figure 6a). The high position of the band suggests that nitrogen is linked to a very electronegative group. This observation together with the striking break in the absorption rate around 0.9-1 mol absorbed CO₂ and the apparent maximum absorption capacity of 1.5 mol CO₂ per mol [P₆₆₆₁₄][Lys] make us suggest, that half a mol of CO₂ is absorbed in this IL (under dry conditions) as a carbamate creating a NH₃⁺ group and a COO⁻ group. Hence, we propose that the [P₆₆₆₁₄][Lys]-CO₂ and [N₆₆₆₁₄][Lys]-CO₂ adducts comprise two different anion structures, as schematically shown in reaction scheme (2) below.

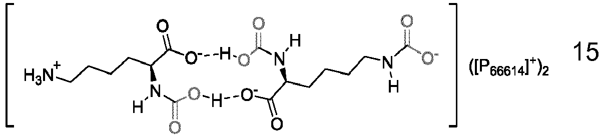

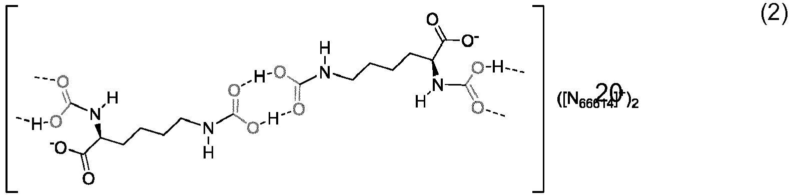

The apparent viscosity of the neat [N₆₆₆₁₄][Lys] IL is significantly higher (> 200 mPa/s at 80 °C) than for the [P₆₆₆₁₄][Lys] IL. This suggests weaker interactions between the carboxylate of the lysinate anion and the cations in the latter liquid, thus initially making the catalytically active carboxylate group more accessible in [P₆₆₆₁₄][Lys] than in [N₆₆₆₁₄][Lys] during CO₂ absorption. Accordingly, the chemisorption kinetics is faster in the phosphonium IL, but the capacity is lower due to competitive formation of strongly hydrogen bonded complexes with the formed carboxylic acids.

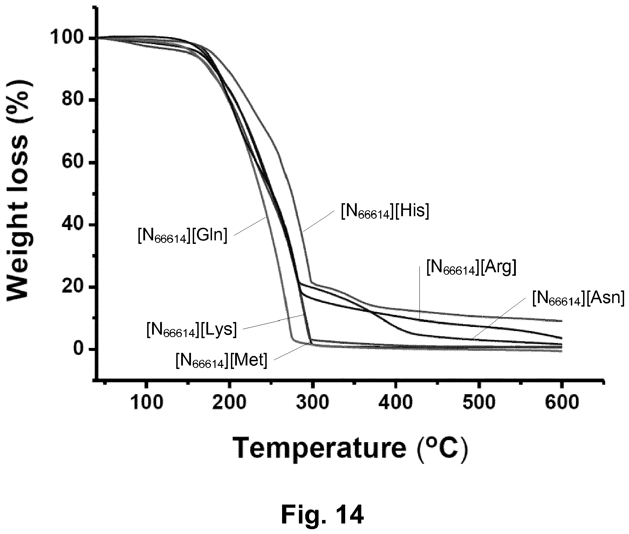

Figure 14 shows the thermal stability of the different functionalized ionic liquids [N₆₆₆₁₄][Lys], [N₆₆₆₁₄][Asn], [N₆₆₆₁₄][Gln], [N₆₆₆₁₄][His], [N₆₆₆₁₄][Arg], and [N₆₆₆₁₄][Met] according to this invention measured by TGA analysis.

The temperature stability of the ILs can be estimated from the TGA results, where the point of decomposition is determined by initial curvature of both the curve representing the weight as well as the heat flux to the sample. The points of decomposition for all the pure ILs were measured to be 140-150 °C.

The above described figures individually and/or in combination show that amine functionalized amino acid ILs like, e.g. [N₆₆₆₁₄][Lys] absorb CO₂ gas at ambient conditions corresponding to unprecedented 2.0 ± 0.1 mol of CO₂ per mol of IL (3.5 mol CO₂ per kg IL, 13.1 wt.% CO₂).

At elevated temperature of 80 °C, the absorption capacity of [N₆₆₆₁₄][Lys] is equal to 1 mol CO₂ per mol of IL, demonstrating that it is possible to desorb the CO₂ gas under CO₂-rich conditions by temperature-swing absorption. Moreover, the recycling experiments of figure 4 confirms the successful use of the IL in three consecutive sorption cycles, apparently even with an improved performance after the first cycle.

Mechanistic investigations of the absorption process by NMR and in situ FTIR studies reveales, that CO₂ absorption in the [N₆₆₆₁₄][Lys] IL results in formation of carbamic acids by reaction of CO₂ with the amine groups according to a 2:1 mechanism, where the amino acid carboxylate group plays an important catalytic role for fast absorption up to 1.8 moles of CO₂. This seems to be due to the carboxylic acids formed arranges as acid-acid dimers with only little interaction with the carboxylate group, thus allowing the reaction to proceed until almost stoichiometric conversion.

For the analogous phosphonium-based IL, [P₆₆₆₁₄][Lys], a very fast initial CO₂ absorption rate up to 0.9 moles of CO₂ is observed, where after the rate decreased dramatically as the formed acid species hydrogen bonded strongly with the carboxylate group thereby inhibiting its catalytic effect. The origin of the cationic effect is speculated to be correlated to the strength of the ion interactions in the two different ILs.

### Experimental details

### NMR studies

¹H (300 MHz) and ¹³C-NMR (75 and 50MHz) spectra were recorded on a Bruker AM360 NMR spectrometer in D₂O, CD₃CN, CD₄OD or DMSO-d₆ at 25 °C. The NMR results obtained (and shown in figures 3a-b for [N₆₆₆₁₄][Lys]) are the following:

### [N₆₆₆₁₄][Lys] prior to saturation

¹H**-NMR (300 MHz, D2O): δ/ppm =** 0.7-0.8 (m, 12H; 4CH₃), 1.05-1.7 (m, 54H; 27CH₂), 2.4 (t, 2H; CH₂), 2.9-3.2 (m, 9H;4CH₂ & CH); ¹³C**-NMR (75.5 MHz, CD3OD): δ/ppm =** 13.4, 13.6, 21.6, 22.5, 22.7, 22.8, 26.0, 29.4, 29.6, 29.7, 29.8, 31.3, 32.0, 33.1, 35.7, 41.5, 47.4, 47.6, 47.9, 48.2, 48.5, 48.9, 56.8, 58,7,181.3. ¹H-NMR (300 MHz, DMSO-d₆): **δ/ppm = 0.8**-1.0 (m, 12H; 4CH₃), 1.1-1.4 (m, 44H; 22CH₂), 1.4-1.65 (m, 10H; 5CH₂), 2.5 (m, 2H; CH₂), 2.7 (t, 1H; CH₂), 3.1-3.3 (m, 8H;4CH₂); ¹³C-NMR (50 MHz, DMSO-d₆): **δ/ppm = 13.7, 13.8, 21.0, 21.9, 22.1, 23.6, 25.4, 25.7, 28.3, 28.7, 29.0,** 30.6, 31.3, 34.0, 34.5, 36.4, 41.9, 56.4, 57.6, 176.8.

### [N₆₆₆₁₄][Lys] after CO₂ saturation

¹H-NMR (300 MHz, DMSO-**d6**): **δ/ppm = 0.8**-1.0 (m, 12H; 4CH₃), 1.1-1.4 (m, 44H; 22CH2), 1.4-1.65 (m, 10H; 5CH2), 2.9 (m, 2H; CH2), 3.4 (t, 1H; CH2), 3.1-3.3 (m, 8H;4CH2); ¹³C-NMR (50 MHz, DMSO-d₆): **δ/ppm = 13.5, 21.0, 21.8, 22.0,** 22.9, 25.4, 25.6, 26.5, 26.8, 28.3, 28.7, 29.0, 30.2, 30.5, 31.3, 32.6, 34.0, 53.5, 55.6, 57.6, 60.4, 159.6, 160.1, 175.8.

### [N₆₆₆₁₄][Asn] prior to CO₂ saturation

¹H-NMR (300 MHz, CD₃CN): **δ/ppm** = 1.4-1.5(m, 12H; 4CH₃), 1.8-2.0 (m, 40H; 20CH₂), 2.1-2.25 (m, 8H; 4CH₂), 2.65-3.1 (m, 2H; 1CH₂), 3.6-3.7 (m, 8H, 4CH₂), 3.7-3.8 (t, 1H, CH); ¹H-NMR (300 MHz, DMSO-d₆): **δ/ppm = 0.8**-1.0(m, 12H; 4CH₃), 1.2-1.4 (m, 40H; 20CH₂), 1.4-1.65 (m, 8H; 4CH₂), 1.9-2.42 (m, 2H; 1CH₂), 3.1 (t, 1H, CH),3.1-3.25 (m, 8H, 4CH₂);¹³C-NMR (75.5 MHz, CD₃**CN**): **δ/ppm = 13.3, 14.0, 21.8, 22.6, 22.9, 26.1,** 26.3, 29.1, 29.5, 29.6, 29.7, 29.86, 29.9, 30.0, 31.4, 32.1, 43.5, 49.5, 54.5, 58.7, 175.8, 177.4.

### [N₆₆₆₁₄][Asn] after CO₂ saturation

¹H-NMR (300 MHz, DMSO-d₆): **δ/ppm = 0.8**-1.0(m, 12H; 4CH₃), 1.2-1.4 (m, 40H; 20CH₂), 1.4-1.65 (m, 8H; 4CH₂), 2.2-2.5 (m, 2H; 1CH₂), 3.1-3.25 (m, 8H, 4CH₂), 3.75 (t, 1H, CH).

### [N₆₆₆₁₄][Gln] prior to CO₂ saturation

¹H-NMR (300 MHz, DMSO-d₆): **δ/ppm = 0.8**-0.1 (m, 12H; 4CH₃), 1.2-1.4 (m, 40H; 20CH₂), 1.4-2.2. (m, 12H; 6CH₂), 2.8 (t, 1H, CH),3.1-3.3 (m, 8H, 4CH₂); ¹³C-NMR (75.5 MHz, DMSO-d₆): **δ/ppm = 14.4, 14.5, 21.8, 22.7, 22.9, 26.2, 29.1, 29.2, 29.5, 29.7,** 29.9, 31.4, 32.1, 33.5, 33.9, 49.9, 56.6, 58.3,176.2, 177.4.

### [N₆₆₆₁₄][Gln] after CO₂ saturation

¹H-NMR (300 MHz, DMSO-d₆): **δ/ppm = 0.8**-0.1 (m, 12H; 4CH₃), 1.2-1.4 (m, 40H; 20CH₂), 1.4-1.6 (m, 8H; 4CH₂), 1.6-2.1 (m, 4H; 2CH₂), 3.1-3.3 (m, 8H, 4CH₂), 3.4 (t, 1H, CH).

### [N₆₆₆₁₄][His] after CO₂ saturation

¹H-NMR (300 MHz, DMSO-d₆): **δ/ppm = 0.8**-0.1 (m, 12H; 4CH₃), 1.2-1.4 (m, 40H; 20CH₂), 1.4-1.7 (m, 8H; 4CH₂), 2.85-3.0 (m, 2H,1 CH₂), 3.1 (t, 1H, CH), 3.1-3.3 (m, 8H, 4CH₂), 6.6 (s, 1H, Ar-CH), 7.4 (s, 1H, Ar-CH).

### [N₆₆₆₁₄][Arg] after CO₂ saturation

¹H-NMR (300 MHz, DMSO-d₆): **δ/ppm** = **0.8**-0.1 (m, 12H; 4CH₃), 1.0-1.3 (m, 42H; 21CH₂), 1.4-1.6 (m, 8H; 4CH₂), 2.15 (m, 2H, 1 CH₂), 2.85 (t, 1H, CH), 2.95 (m, CH, 1CH2), 3.0-3.2 (m, 8H, 4CH₂).

### [N₆₆₆₁₄][Met] after CO₂ saturation

¹H**-NMR (300 MHz, D2O): δ/ppm =** 0.7-0.8 (m, 12H; 4CH₃), 1.05-1.3 (m, 40H; 20CH₂), 1.4-1.6 (m, 8H, 4CH₂), 1.6-1.9 (m, 2H, CH₂) 1.95 (s, 3H, CH₃), 2.4 (t, 2H; CH₂), 3.0-3.1 (m, 8H; 4CH₂), 3.2 (t, 1H, CH); ¹³C-NMR (75.5 MHz, CD₃**OD**): **δ/ppm** = **13.3, 13.4,** 13.6, 21.6, 22.4, 22.7, 25.9, 26.0, 29.2, 29.4, 29.7, 29.73, 30.5, 31.2, 32.0, 35.7, 56.1, 58.2, 181.0.

### Synthesis of [P66614][Lys]

15 mmol of trihexyl(tetradecyl)phosphonium bromide ([P₆₆₆₁₄][Br]) was dissolved in 10 ml of methanol and 1.2 equivalent of amberlite IRA 400 (OH) ion exchange resin added to the mixture. The reaction mixture was allowed to stir to ion-exchange at room temperature. After 24h, resin was filtered off and 1.2 equivalent fresh amberlite IRA 400 (OH) resin added to the filtrate. The same procedure was repeated three times to get the maximum ion-exchanged [P₆₆₆₁₄][OH] ionic liquid in methanol. After the third ion-exchange, methanolic solution of [P₆₆₆₁₄][OH] was neutralised with slightly excess equimolar amount of lysine and allowed to stir overnight. The methanol was evaporated and the unreacted amino acid was removed by using cold aceonitrile to get the ionic liquid [P₆₆₆₁₄][Lys]. The unexchanged bromide was measured in Metrohm ion chromatography and it was found to be 3200 ppm. The bromide content was quantified from series of standards of [P₆₆₆₁₄][Br].
¹H-NMR (300 MHz, D₂O) δ = 0.7-0.8 (m, 12H; 4CH₃), 1.05-1.65 (m, 54H; 27CH₂), 2.5 (t, 2H; CH₂), 2.95-3.2 (m, 9H; 4CH₂ and CH); ¹H-NMR (300 MHz, DMSO-d₆): δ/ppm = 0.8-1.0 (m, 12H; 4CH₃), 1.2-1.6 (m, 54H; 27CH₂), 2.1-2.3 (m, 8H; 4CH₂), 2.5 (m, 2H; CH₂), 2.65 (t, 1H; CH₂); ¹³C-NMR (75.5 MHz, MeOH-d₄) **δ = 13.40, 13.47, 13.59,** 13.63, 21.57, 21.63, 22.46, 22.72, 23.23, 25.96, 26.20, 29.03, 29.41, 29.44, 29.50, 29.58, 29.64, 29.73, 29.75, 29.77, 31.28, 31.94, 32.03, 33.10, 35.53, 41.47, 56.52, 58.22, 58.37, 181.14.; ¹³C-NMR (50 MHz, DMSO-d₆): **δ/ppm = 14.4, 14.5, 18.0, 18.6,** 21.4, 21.5, 22.6, 22.8, 24.4, 29.0, 29.5, 29.8, 30.5, 30.7, 31.2, 32.1, 34.7, 42.7, 49.5, 57.1, 177.6.

### TGA analysis, general procedure

Thermo gravimetric analysis (TGA) was performed on a Mettler Toledo TGA/DSC 1 STAR System with a Gas Controller GC 100 and a flow of nitrogen of 70 mL/min. A crucible was weighed inside the TGA instrument and approximately 5-15 mg of IL was transferred to it before reinsertion. The weight was noted and during measurements samples were heated from 40 to 600 °C at a constant heating rate of 10 °C/min under nitrogen atmosphere.

### CO₂ sorption studies

CO₂ absorptions were carried out with 1-2 g of neat amino acid ILs in a closed vessel by bubbling CO₂ (99.990 %, Air Liquide) through the liquid at various temperatures at atmospheric pressure. Desorption was performed at 80 °C under an argon flow. The CO₂ absorption capacity was measured with a gravimetric balance (0.1 mg accuracy) by weighing the vessel periodically during the sorption experiments.

### In situ ATR-FTIR studies

IR spectra of the amino acid ILs where recorded on a Nicolet iS5 spectrometer (8 scans, 4 cm⁻¹ resolution) equipped with a heatable diamond ATR cell (GladiATR, Pike Technologies) and a special gas absorption add-on device. The IL samples where outgassed in situ at 80 °C in 100 mL/min He before being exposed to a gas mixture of 60:40 vol% CO₂:He at a flow of 35 mL/min. Helium was either used dry or humidified with water vapour. Desorption experiments where performed at 80 °C. All spectra were ATR corrected using OMNIC software assuming a refractive index of 1.5. A special deconvolution procedure was developed to accurately determine the area of the carboxylate bands at 1700-1695, 1670-1660 and 1640-1635 cm⁻¹. Initially we aimed to determine the band areas related to the carboxylic acids species from the difference spectra (IL+CO₂ spectra at a given time minus the spectra of the outgassed IL). However, this proved unpractical as the neighbouring C=O stretching bands from the carboxylate group at around 1590 cm⁻¹ shifted significantly during the CO₂ absorption. The problem was solved by first fitting a spectrum of the pure outgassed IL -before CO₂ absorption - with nine Gaussian functions where the sum of the functions served as background spectra. Then the Gaussian function equivalent to the carboxylate C=O stretching band was removed from the static background sum-function and the quasi-difference spectrum deconvoluted. The spectrum at a given time during CO₂ exposure minus the manipulated background function was then fitted, thereby allowing the bands of the carboxylate group to act dynamic and thus enhance the accuracy of the deconvolution. A script package was developed using Gnuplot 4 to automate the deconvolution of the large amounts of spectra needed to establish the presented kinetic data.

## Claims

1. A composition for absorption/desorption of gaseous carbon dioxide (CO₂), the composition comprising an ionic compound comprising a cation **[A⁺]** and an anion **[B⁻],** wherein the anion **[B⁻]** is a mono-amine functionalized amino acid and the cation **[A⁺]** is given by the formula: 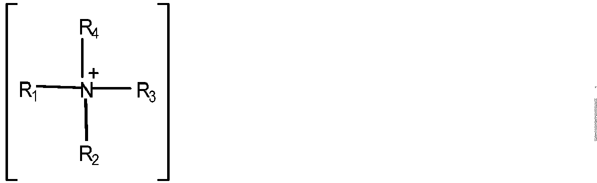 wherein R₁ is a Cₙ alkyl chain where n is an integer having a value of at least 10 and not more than 30, and R₂, R₃ and R₄ are individually selected from the group of methyl, ethyl, propyl, butyl, pentyl, hexyl, heptyl and octyl.

2. A composition according to claim 1, wherein R₂, R₃ and R₄ are individually selected from the group of ethyl, propyl, butyl, pentyl, hexyl, heptyl and octyl.

3. A composition according to claim 1 or 2, wherein R₂, R₃ and R₄ are alkyl chains of identical length.

4. A composition according to any preceding claim, wherein R₁ is selected from C₁₄H₂₉ and C₁₆H₃₃, and R₂, R₃ and R₄ are individually selected from butyl and hexyl.

5. A composition according to any preceding claim, wherein the cation is one of the following ammonium ions:

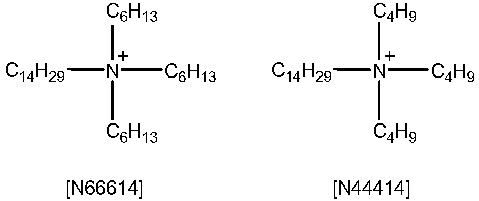

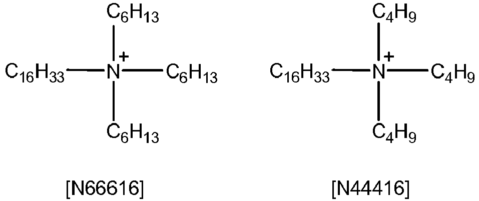

6. A composition according to claim 5, wherein the cation is [N66614].

7. A composition according to claim 5, wherein the cation is [N66616].

8. A composition according to claim 5, wherein the cation is [N44414].

9. A composition according to claim 5, wherein the cation is [N44416].

10. A composition according to any preceding claim, wherein the anion is selected from lysine (Lys), histidine (His), asparagine (Asn), glutamine (Gln).

11. A composition according to claim 10, wherein the ionic compound is selected from [N66614][Lys], [N66614][Asn], [N66614][Gln] or [N66614][His].

12. A composition according to any preceding claim, wherein the composition further comprises a high surface area porous inert material such as e.g. a high surface area mesoporous inert material.

13. A composition according to claim 12, wherein the high surface area porous inert material is selected from high surface area inorganic, carbonaceous or polymeric materials such as, but not limited to, silica, alumina, titania, zirconia or clays, or mixtures hereof.

14. A composition according to claim 12 or 13, wherein the ionic compound is adsorbed on the high surface area porous inert material, the combined structure referred to as a supported ionic liquid phase (SILP) material.

15. A composition according to any preceding claim, wherein the composition has an absorption capacity of approximately 2 mol CO₂/mol of the ionic compound.

16. A method for absorption of gaseous CO₂ from a gas stream, the method comprising contacting said gas stream with a composition according to any preceding claims.

17. A method for absorption of gaseous CO₂ from a gas stream according to claim 16, wherein the gas stream contains 1 - 100 mol% CO₂, or preferably 2 - 60 mol% CO₂, or more preferably 3 - 25 mol% CO₂.

18. A method for desorption of CO₂ absorbed on a composition according to any of claims 1-15, the method comprising increasing the temperature of the composition and/or decreasing the total pressure surrounding it and/or by flushing it with a gas stream with no or lower CO₂ content than the gas stream originally applied for the absorption.

19. Use of a composition according to any of claims 1-15 for the removal of CO₂ in stationary plants such as e.g. power plants, or a flue-gas stream in a power plant.

## Patentansprüche

1. Zusammensetzung zur Absorption/Desorption von gasförmigem Kohlendioxid (CO₂), wobei die Zusammensetzung eine ionische Verbindung umfasst, welche ein Kation **[A⁺]** und ein Anion **[B⁻]** umfasst, wobei das Anion **[B⁻]** eine Mono-Amin-funktionalisierte Aminosäure ist, und das Kation **[A⁺]** durch die Formel gegeben ist: 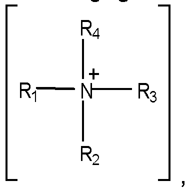 worin R₁ eine Cₙ-Alkylkette ist, wobei n eine Ganzzahl mit einem Wert von mindestens 10 und nicht mehr als 30 ist, und R₂, R₃ sowie R₄ einzeln aus der Gruppe von Methyl, Ethyl, Propyl, Butyl, Pentyl, Hexyl, Heptyl und Octyl ausgewählt sind.

2. Zusammensetzung nach Anspruch 1, wobei R₂, R₃ und R₄ einzeln aus der Gruppe von Ethyl, Propyl, Butyl, Pentyl, Hexyl, Heptyl und Octyl ausgewählt sind.

3. Zusammensetzung nach Anspruch 1 oder 2, wobei R₂, R₃ und R₄ Alkylketten identischer Länge sind.

4. Zusammensetzung nach einem der vorgehenden Ansprüche, wobei R₁ aus C14H29 und C₁₆H₃₃ ausgewählt ist, und R₂, R₃ sowie R₄ einzeln aus Butyl und Hexyl ausgewählt sind.

5. Zusammensetzung nach einem der vorgehenden Ansprüche, wobei das Kation eines der folgenden Ammoniumionen ist:

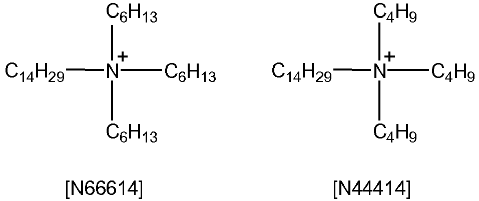

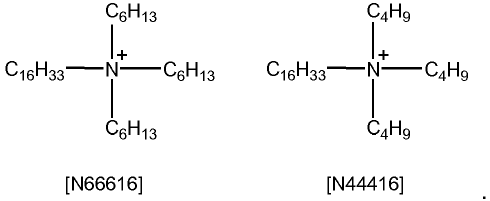

6. Zusammensetzung nach Anspruch 5, wobei das Kation [N66614] ist.

7. Zusammensetzung nach Anspruch 5, wobei das Kation [N66616] ist.

8. Zusammensetzung nach Anspruch 5, wobei das Kation [N44414] ist.

9. Zusammensetzung nach Anspruch 5, wobei das Kation [N44416] ist.

10. Zusammensetzung nach einem der vorgehenden Ansprüche, wobei das Anion aus Lysin (Lys), Histidin (His), Asparagin (Asn), Glutamin (Gln) ausgewählt ist.

11. Zusammensetzung nach Anspruch 10, wobei die ionische Verbindung aus [N66614][Lys], [N66614][Asn], [N₆₆₆₁₄][Gln] oder [N66614][His] ausgewählt ist.

12. Zusammensetzung nach einem der vorgehenden Ansprüche, wobei die Zusammensetzung ferner ein poröses inertes Material mit großem Oberflächenbereich, wie beispielsweise ein mesoporöses inertes Material mit großem Oberflächenbereich, umfasst.

13. Zusammensetzung nach Anspruch 12, wobei das poröse inerte Material mit großem Oberflächenbereich aus anorganischen, kohlenstoffhaltigen oder polymeren Materialien mit großem Oberflächenbereich ausgewählt, wie etwa aber nicht beschränkt auf Siliziumoxid, Aluminiumoxid, Titandioxid, Zirkonoxid oder Tonen oder Mischungen davon ist.

14. Zusammensetzung nach Anspruch 12 oder 13, wobei die ionische Verbindung auf dem porösen inerten Material mit großem Oberflächenbereich absorbiert ist, wobei die kombinierte Struktur als ein Material mit einer geträgerten ionischen Flüssigkeitsphase (SILP) bezeichnet wird.

15. Zusammensetzung nach einem der vorgehenden Ansprüche, wobei die Zusammensetzung eine Absorptionsfähigkeit von etwa 2 Mol CO₂/Mol der ionischen Verbindung aufweist.

16. Verfahren zur Absorption von gasförmigem CO₂ aus einem Gasstrom, wobei das Verfahren das In-Kontakt-Bringen des Gasstroms mit einer Zusammensetzung nach einem der vorgehenden Ansprüche umfasst.

17. Verfahren zur Absorption von gasförmigem CO₂ aus einem Gasstrom nach Anspruch 16, wobei der Gasstrom 1 - 100 Mol% CO₂ oder bevorzugt 2 - 60 Mol% CO₂ oder bevorzugter 3 - 25 Mol% CO₂ enthält.

18. Verfahren zur Desorption von auf einer Zusammensetzung nach einem der Ansprüche 1-15 absorbiertem CO₂, wobei das Verfahren eine Erhöhung der Temperatur der Zusammensetzung und/oder eine Verringerung des sie umgebenden Gesamtdrucks umfasst, und/oder indem sie mit einem Gasstrom gespült wird, der keinen oder einen niedrigeren CO₂ -Gehalt aufweist als der ursprünglich für die Absorption verwendete Gasstrom.

19. Verwendung einer Zusammensetzung nach einem der Ansprüche 1-15 zur Entfernung von CO₂ in stationären Anlagen wie beispielsweise Kraftwerken oder einem Rauchgasstrom in einem Kraftwerk.

## Revendications

1. Composition pour l'absorption / la désorption de dioxyde de carbone gazeux (CO₂), la composition comprenant un composé ionique comprenant un cation **[A⁺]** et un anion **[B⁻],** où l'anion **[B⁻]** est un acide aminé fonctionnalisé par une monoamine; et le cation **[A⁺]** est donné par la formule : 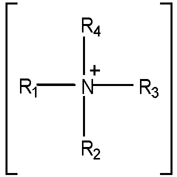 dans laquelle R₁ est une chaîne alkyle en Cₙ où n est un entier ayant une valeur d'au moins 10 et pas plus de 30, et R₂, R₃ et R₄ sont individuellement choisis dans le groupe consistant en méthyle, éthyle, propyle, butyle, pentyle, hexyle, heptyle et octyle.

2. Composition selon la revendication 1, dans laquelle R₂, R₃ et R₄ sont choisis individuellement dans le groupe consistant en éthyle, propyle, butyle, pentyle, hexyle, heptyle et octyle.

3. Composition selon la revendication 1 ou 2, dans laquelle R₂, R₃ et R₄ sont des chaînes alkyles de longueur identique.

4. Composition selon l'une quelconque des revendications précédentes, dans laquelle R₁ est choisi parmi C₁₄H₂₉ et C₁₆H₃₃, et R₂, R₃ et R₄ sont choisis individuellement parmi butyle et hexyle.

5. Composition selon l'une quelconque des revendications précédentes, dans laquelle le cation est l'un des ions ammonium suivants :

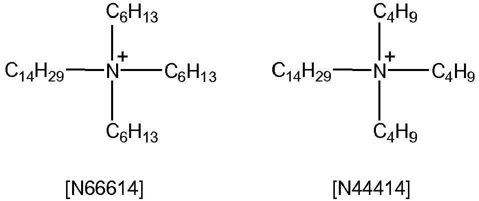

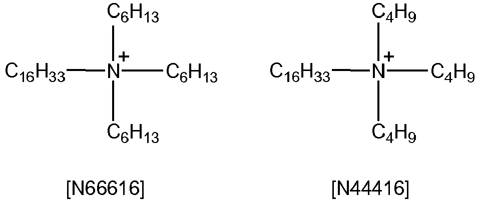

6. Composition selon la revendication 5, dans laquelle le cation est [N66614].

7. Composition selon la revendication 5, dans laquelle le cation est [N66616].

8. Composition selon la revendication 5, dans laquelle le cation est [N44414].

9. Composition selon la revendication 5, dans laquelle le cation est [N44416].

10. Composition selon l'une quelconque des revendications précédentes, dans laquelle l'anion est choisi parmi la lysine (Lys), l'histidine (His), l'asparagine (Asn), la glutamine (Gin).

11. Composition selon la revendication 10, dans laquelle le composé ionique est choisi parmi [N66614][Lys], [N66614][Asn], [N₆₆₆₁₄][Gln] ou [N66614][His].

12. Composition selon l'une quelconque des revendications précédentes, dans laquelle la composition comprend en outre un matériau inerte poreux à grande surface tel que par ex. un matériau inerte mésoporeux à grande surface.

13. Composition selon la revendication 12, dans laquelle le matériau inerte poreux à grande surface est choisi parmi les matériaux polymères, carbonés ou inorganiques à grande surface, tels que, mais sans s'y limiter, la silice, l'alumine, le titane, les zircones ou l'argile ou leurs mélanges.

14. Composition selon la revendication 12 ou 13, dans laquelle le composé ionique est adsorbé sur le matériau inerte poreux à grande surface, la structure combinée étant appelée matériau de phase liquide ionique supportée (SILP).

15. Composition selon l'une quelconque des revendications précédentes, dans laquelle la composition a une capacité d'absorption d'environ 2 mol CO₂/mol du composé ionique.

16. Procédé d'absorption de CO₂ gazeux à partir d'un courant gazeux, le procédé comprenant la mise en contact dudit courant gazeux avec une composition selon l'une quelconque des revendications précédentes.

17. Procédé d'absorption de CO₂ gazeux à partir d'un courant gazeux selon la revendication 16, dans lequel le courant gazeux contient 1 à 100 mol% de CO₂, ou de préférence 2 - 60 mol% de CO₂, ou plus préférentiellement 3 - 25 mol% de CO₂.

18. Procédé de désorption de CO₂ absorbé sur une composition selon l'une quelconque des revendications 1 à 15, le procédé comprenant l'augmentation de la température de la composition et / ou la diminution de la pression totale l'entourant et / ou par le rinçage d'un courant gazeux sans ou teneur en CO₂ plus faible que le flux de gaz initialement appliqué pour l'absorption.

19. Utilisation d'une composition selon l'une quelconque des revendications 1 à 15 pour l'élimination du CO₂ dans des centrales stationnaires telles que par ex. centrales électriques, ou un flux de gaz de combustion dans une centrale électrique.
